# EUROPEAN PATENT APPLICATION

(11) **EP 3 444 368 A1**
(43) Date of publication of application: **20.02.2019**
(21) Application number: 17782438.0
(22) Date of filing: 12.04.2017
(51) Int. Cl.: C22C 21/00, B22D 11/00, B22D 11/06, B23K 1/00, F28F 21/08, B21B 3/00

(54) **ALUMINUM ALLOY FIN MATERIAL, ALUMINUM ALLOY BRAZING SHEET, AND HEAT EXCHANGER**

(30) Priority: 12.04.2016 JP 2016079933; 27.03.2017 JP 2017060744
(71) Applicant: UACJ Corporation, Tokyo 100-0004 (JP)
(72) Inventor: KUROSAKI Tomohito, Tokyo 100-0004 (JP); NINOMIYA Junji, Tokyo 100-0004 (JP); MIZUTA Yoshihiko, Tokyo 100-0004 (JP); FUJIMURA Ryoko, Tokyo 100-0004 (JP)
(74) Representative: v. Bezold & Partner Patentanwälte - PartG mbB
(86) International application number: PCT/JP2017/015001
(87) International publication number: WO 2017/179625

(57) **Abstract**

An aluminum alloy fin material includes an aluminum alloy containing 1.50 to 5.00 mass% Si with the balance of Al and inevitable impurities, and has the function of being bonded by heating with a single layer. Assuming that in a cross section along the thickness direction of the fin material, the equivalent circle diameter of a Si particle is represented by D, a distance from a surface layer to the center of the Si particle is represented by L, the thickness of the fin material is represented by t, and a length parallel to the surface layer is represented by W, all Si particles that are present in the range of the length W and satisfy D ≥ L and L + D > 0.04t also satisfy 0 ≤ ∑πD² < 0.08tW. An aluminum alloy brazing sheet includes, as a skin material, the fin material that is clad on a core material including an aluminum alloy. A heat exchanger includes the fin material or the brazing sheet that is used in a fin.

## Description

### Technical Field

The present disclosure relates to an aluminum alloy fin material, an aluminum alloy brazing sheet, and a heat exchanger.

### Background Art

Conventionally, brazing fins of which the skin materials are clad with Al-Si-based alloys have been commonly used as aluminum alloy fin materials having the function of being bonded to tubes by heating. In such a brazing fin, a skin material is melted and flows in the case of heating and bonding, and therefore, a sheet thickness is decreased according to the melting. Patent Literature 1 discloses a fin materials having the function of being bonded by heating with a single-layer material but does not disclose suppression of a decrease in sheet thickness.

For example, in each of the end edges of many sheet-shaped fins arranged at a predetermined spacing from each other in a fin-and-tube-type heat exchanger, plural notch grooves opened to penetrate the same positions of the sheet-shaped fins are disposed along each of the end edges. A structure is made in which collars are formed on the notch grooves so as to come in contact with a surface of a flat tube through which a heat-transfer fluid flows, and in which the flat tube is fit in the notch grooves. The tube is assembled, heated, and bonded in the state of extending in the direction of overlapping such sheet-shaped fins, whereby the heat exchanger is produced.

There is a problem that a clearance between a tube surface and a fin surface becomes large when such a heat exchanger is bonded and heated and the sheet thickness of a fin material is reduced at the time of the bonding. There is a problem that when a decrease in sheet thickness is large, it is impossible to fill the clearance with a melted bonding assistant, and a bonding rate is decreased.

A decrease in sheet thickness due to the heating for bonding results in the deterioration of rigidity due to a decrease in the cross-sectional area of the fin. There is a problem that, therefore, it is necessary to use a fin material of which the thickness is larger than a fin sheet thickness required after the heating for bonding, resulting in an increase in the cost of the material.

It is conceivable to use the fin material having the function of being bonded by heating with a single layer "with a very small dimensional change" disclosed in Patent Literature 1 in order to suppress such a decrease in sheet thickness. However, although it is described that a change in the dimension of the fin material is very small, a decrease in sheet thickness is not described in Examples, and deformation caused by bending stress referred to as a sag test is merely described.

It is also conceivable to use, as a fin material, a brazing fin having a decreased cladding ratio. However, a decrease in cladding ratio in the fin material having a small sheet thickness precludes production of the fin material.

### Citation List

### Patent Literature

Patent Literature 1: Japanese Patent No. 5021097

### Summary of Invention

### Technical Problem

The present disclosure was accomplished with respect to the above-described problems. An objective of the present disclosure is to provide an aluminum alloy fin material, an aluminum alloy brazing sheet, and a heat exchanger, which have a small decrease in the sheet thickness of the fin material, the low deterioration of bondability, and the low deterioration of rigidity in bonding and heating.

### Solution to Problem

In order to achieve the above-described objective, an aluminum alloy fin material according to a first aspect of the present disclosure is:
an aluminum alloy fin material including:
an aluminum alloy containing 1.50 to 5.00 mass% Si with the balance of A1 and inevitable impurities,
wherein assuming that in a cross section along the thickness direction of the fin material, the equivalent circle diameter of a Si particle is represented by D, a distance from a surface layer to the center of the Si particle is represented by L, the thickness of the fin material is represented by t, and a length parallel to the surface layer is represented by W, all Si particles that are present in the range of the length W and satisfy D ≥ L and L + D > 0.04t also satisfy 0 ≤ ∑πD² < 0.08tW.

The aluminum alloy may further contain one or more selected from 0.01 to 2.00 mass% Fe, 0.05 to 2.00 mass% Mn, 0.05 to 6.00 mass% Zn, and 0.05 to 1.50 mass% Cu.

An aluminum alloy brazing sheet according to a second aspect of the present disclosure is:
an aluminum alloy brazing sheet including, as a skin material, the aluminum alloy fin material, the aluminum alloy fin material being clad on a core material including an aluminum alloy.

A heat exchanger according to a third aspect of the present disclosure is:
a heat exchanger including the aluminum alloy fin material, the aluminum alloy fin material being used in a fin.

A heat exchanger according to a fourth aspect of the present disclosure is:
a heat exchanger including the aluminum alloy brazing sheet, the aluminum alloy brazing sheet being used in a fin.

### Advantageous Effects of Invention

The aluminum alloy fin material, aluminum alloy brazing sheet, and heat exchanger according to the present disclosure have a small decrease in the sheet thickness of the fin material, the low deterioration of bondability, and the low deterioration of rigidity in bonding and heating. Specifically, since the rate of decrease in sheet thickness after the heating is less than that before the heating for bonding in the fin material, a clearance generated between the fin material and another member at the time of the heating for bonding can be suppressed. As a result, the fin material having high bondability and the brazing sheet using the fin material can be obtained. Since the less decrease in sheet thickness can result in the less deterioration of rigidity after the bonding, the thicknesses of the fin material and the brazing sheet can be reduced, and the weight of the heat exchanger using the fin material and the brazing sheet can be reduced.

### Brief Description of Drawings

FIG. 1 is a perspective view of a heat exchanger according to the present embodiment, which is used for evaluating bondability, and in which plate-shaped fin materials and flat tubes are combined; and
FIG. 2 is a front view of the sheet-shaped fin in FIG. 1.

### Description of Embodiments

As a result of intensive examination, the present inventors found that the deterioration of the bondability and rigidity of a fin material can be suppressed by controlling the rate of decrease in sheet thickness after bonding the fin material to a tube with respect to a sheet thickness before the bonding in order to solve the problems. In addition, it was found that such suppression of the rate of decrease in sheet thickness is achieved by appropriately controlling particles included in a metal structure in the vicinity of a surface layer.

An aluminum alloy fin material according to an embodiment of the present disclosure will be described below.

### 1. Metal Structure

### 1-1. Regulation of Metal Structure

The aluminum alloy fin material according to the present embodiment includes an aluminum alloy containing 1.50 to 5.00 mass% Si with the balance of A1 and inevitable impurities, and has the function of being bonded by heating with a single layer. Assuming that the thickness of the fin materials is represented by t, a cross section along a thickness direction is considered, which is divided into a cross section portion closer to one surface, from one surface to the half of the thickness t, and a cross section portion closer to the other surface, from the other surface to the half of the thickness t.

Assuming that the equivalent circle diameter of a Si particle is represented by D, a distance from the one or other surface to the center of the Si particle is represented by L, and a length parallel to a surface layer is represented by W, all Si particles that are present in the range of the length W and satisfy D ≥ L and L + D > 0.04t also satisfy 0 ≤ ∑πD² < 0.08tW. Here, ∑πD² is defined as the sum of cross-sectional areas πD² in the case of melting all the Si particles that are present in the range of the length W (the area of t × W) and satisfy D ≥ L and L + D > 0.04t in the whole of both the one and other cross section portions (hereinafter referred to as "the whole cross section"). For the units of D, L, t, and W, mm is applied.

### 1-2. Mathematical Expressions Regulating Metal Structure

Mathematical expressions regulating the metal structure and the numerical ranges of parameters will be described below.

### (1) Si Particle Satisfying D ≥ L

This mathematical expression indicates a condition for allowing a melted Si particle to flow onto a surface when the Si particle is melted. When being melted, the Si particle reacts with a surrounding matrix and becomes a liquid phase having a spherical shape of which the diameter is about 2 times the diameter of the Si particle. The flow of the liquid phase onto the surface requires that the radius of the liquid phase after the melting, that is, D, which is 1/2 of the diameter 2D of the liquid phase, is not less than the distance L from the surface to the center of the Si particle. As described above, only Si particles satisfying D ≥ L flow onto the surface.

### (2) Si Particle Satisfying L + D > 0.04t

This mathematical expression indicates a condition for contributing to a decrease in sheet thickness by 8% or more when a Si particle is melted and flows onto a surface. When a Si particle having an equivalent circle diameter D at a distance L from a surface is melted, a distance from the surface to the deepest portion of a liquid phase is L + D. When the liquid phase flows onto the surface, a sheet thickness of L + D is decreased in a site in which the liquid phase has been present. A case in which a decrease L + D in sheet thickness allowed to locally occur due to such one Si particle is more than 4% of the thickness t of the whole cross section in one or the other surface side causes a total decrease in sheet thickness in both of the sides to be more than 8%. In contrast, a case in which a decrease L + D in sheet thickness allowed to locally occur due to one Si particle is 4% or less of the thickness t of the whole cross section makes a limited contribution to a decrease in sheet thickness. Accordingly, it is necessary to control Si particles in which L + D is more than 4% of the thickness t of the whole cross section in the one or other surface sides. In other words, only the Si particles satisfying L + D > 0.04t are regulated. In such a case, a decrease in sheet thickness in the one or other surface side is preferably 3% or less, and is more preferably controlled to 2% or less, with respect to the thickness t of the whole cross section, for effectively preventing the deterioration of bondability and rigidity.

### (3) With Regard to Case in Which Si Particles That Are Present in Range of Length W And Satisfy the (1) And (2) Described Above in Whole Cross Section also Satisfy 0 ≤ ∑πD² < 0.08tW

Si particles that are present in the range of the length W and satisfy the (1) and (2) described above in a cross section portion closer to one surface flow onto the one surface and result in a decrease in sheet thickness by more than 4% of the thickness t of the whole cross section in the cross section portion closer to the one surface when the Si particles are melted. Si particles that are present in the range of the length W and satisfy the (1) and (2) described above in a cross section portion closer to the other surface flow onto the other surface and result in a decrease in sheet thickness by more than 4% of the thickness t of the whole cross section in the cross section portion closer to the other surface when the Si particles are melted. Both of the Si particles which result in the decreases in sheet thickness cause the sheet thickness of the whole fin material to be decreased, and therefore, bondability and rigidity are significantly deteriorated. However, when the Si particles which satisfy the (1) and (2) described above are locally present, the deterioration of the bondability and rigidity is limited. Thus, the state of the presence of the Si particles that are present in the range of the length W and satisfy the (1) and (2) described above in the whole cross section of the cross section portions closer to the one and other surfaces is limited.

Specifically, the range of the area of the melted Si particles satisfying the (1) and (2) described above in the whole cross section, that is, ∑πD² obtained by totalizing π × (2D/2)² = πD², is limited. When ∑πD² is low, a site in which a decrease in sheet thickness occurs in the whole cross section is limited. With increasing ∑πD², a site in which a decrease in sheet thickness occurs in the whole cross section is increased to decrease the sheet thickness in the whole fin. In the present embodiment, the rate of ∑πD² to the area (t × W) of the whole cross section described above is regulated to less than 8%, that is, the area of ∑πD² is regulated to less than 0.08tW. Here, in the case of ∑πD² = 0, Si particles which allow the sheet thickness to be decreased by 8% or more in the whole cross section described above are not present, and therefore, favorable bondability and favorable rigidity are maintained. In the case of 0 < ∑πD² < 0.08tW, a decrease in sheet thickness occurs due to melting of Si particles, but a region in which the decrease occurs is partial, and the influence of the decrease on bondability and rigidity is limited. In contrast, in the case of ∑πD² ≥ 0.08tW, the sheet thickness is decreased by 8% or more in the whole cross section described above, that is, the rate of decrease in sheet thickness in the whole fin material is 8% or more, the bondability and rigidity of the fin material are significantly deteriorated. The preferred range of ∑πD² is 0 ≤ ∑πD² < 0.06tW. Here, the rate (%) of decrease in sheet thickness in the present embodiment is defined as a value obtained by discarding digits to the right of the decimal point of an actually determined numerical value.

Bondability is secured due to the presence of solid solution Si or Si particles satisfying L + D ≤ 0.04t even when ∑πD² is almost zero, and the amount of liquid phase supplied from Si particles contributing to a decrease in sheet thickness is small.

Each of the parameters described above will now be described.

### [Equivalent Circle Diameter D of Si Particle]

The equivalent circle diameter D of a Si particle is typically about 0 to 10 µm, and is up to about 30 µm in a case in which a coarse crystallized product is present. A case in which a coarse crystallized product having an equivalent circle diameter D of 30 µm or more causes cracking, a pinhole, and/or the like, and may preclude production. The case of 0 µm means that Si is completely solid-dissolved and is not present as Si particles.

Here, the Si particle refers to: (1) pure Si; and (2) a Si particle containing a slight amount of an element such as Ca or P in part of pure Si. The equivalent circle diameter D of the Si particle can be determined by observing a reflection electron image of a cross section with a scanning electron microscope (SEM). It is preferable to determine the equivalent circle diameter of the Si particle by image analysis of an SEM photograph. The Si particle and other particles are distinguished from each other on the basis of the concentration difference of contrast by SEM-reflection electron image observation. The element such as Ca or P contained in the Si particle can be more precisely specified by an electron probe micro analyzer (EPMA) or the like. Here, the cross section refers to a cross section along the thickness direction of an aluminum alloy material, and may be a cross section along an optional direction such as a cross section along a rolling direction or a cross section along a direction orthogonal to a rolling direction as long as being along the thickness direction.

### [Distance L from Surface Layer of Fin Material to Center of Si Particle]

The distance L from the surface layer of the fin material to the center of the Si particle is not more than the sheet thickness and is therefore less than the sheet thickness t. Here, L is determined by measuring a distance from the center of the Si particle to the surface layer of the fin material when the above-described equivalent circle diameter of the Si particle is determined. In such a case, the measurement can be performed by, for example, taking a photograph of an SEM image of a visual field from the surface layer of the fin material to the target Si particle and performing the analysis of the image. When the Si particle is not a uniaxial crystal, the intermediate position between the point closest to the surface layer of the fin material and the point farthest from the surface layer of the fin material in the Si particle is regarded as the center of the Si particle.

### [Sheet Thickness t of Fin Material]

Typically, use of a fin material having a sheet thickness t of about 0.01 to 0.2 mm is preferred from the viewpoint of weight reduction and workability although t is not particularly limited. A thin fin material of about 0.01 to 0.1 mm or a thick fin material of more than 0.1 mm and about 0.2 mm is used. The sheet thickness t of the fin material is preferably measured with a micrometer. In such a case, in order to determine a difference before and after bonding and heating, the difference is evaluated with the arithmetic mean value of measurements of three or more sheet thicknesses at the same position before and after the heating for bonding for each sample.

### 1-3. Principle of How Metal Structure Shows Effect

The fin material of the present embodiment exhibits a bonding function with a single layer by melting a part of the material to generate a liquid phase at the time of bonding and heating. Si particles in the material react with a surrounding matrix at the time of the bonding and heating, whereby a part of the liquid phase is generated. In such a case, when coarse Si particles are present in a surface layer, melting of the Si particles results in a greater decrease in sheet thickness. Thus, the present inventors found that a decrease in sheet thickness is suppressed by controlling the sizes of Si particles in a surface layer.

### 2. Material

### 2-1. Configuration

The fin material according to the present embodiment is basically used as a fin material having the function of being bonded by heating with a single layer. However, since the effect of suppressing a decrease in the sheet thickness of a surface layer can be similarly obtained even when a brazing fin is made by cladding the fin material according to the present embodiment on another material (core material), the fin material has an advantage that it is not necessary to decrease a cladding ratio. As described above, the fin material according to the present embodiment can also be used in the form of a clad material (brazing fin).

The following description will be given based on the presumption that the fin material according to the present embodiment is used as a single-layered material. In the above-described clad material in which the fin material according to the present embodiment is used, however, the effect of suppressing a decrease in sheet thickness in the portion of the fin material according to the present embodiment can also be obtained according to the following description.

### 2-2. Alloy Composition

The aluminum alloy included in the fin material according to the present embodiment contains 1.50 to 5.00 mass% (hereinafter simply referred to as "%") Si as an essential element with the balance of Al and inevitable impurities. In addition, the aluminum alloy may further contain, as first selective additional elements, one or more selected from 0.01 to 2.00% Fe, 0.05 to 2.00% Mn, 0.05 to 6.00% Zn, and 0.05 to 1.50% Cu.

### 2-2-1. Si: 1.50 to 5.00%

Si is an element that generates an Al-Si-based liquid phase and contributes to bonding. However, when the content of Si is less than 1.50%, it is impossible to generate a sufficient amount of liquid phase, the less bleeding of the liquid phase occurs, and the bonding becomes incomplete. In contrast, when the content is more than 5.00%, the amount of generated liquid phase portion in the aluminum alloy material is increased, and therefore, the strength of the aluminum alloy material which is being heated is decreased, thereby precluding maintaining of the shape of a structure. In addition, the number of Si particles present in the vicinity of the surface layer is also increased, and therefore, the sheet thickness is also significantly decreased. Accordingly, the content of Si is regulated to 1.50 to 5.00%. The content of Si is preferably 1.50 to 3.50%, and more preferably 2.00 to 3.00%. Since the amount of bleeding liquid phase portion is increased with increasing the volume of the fin material and with increasing a heating temperature, the amount of liquid phase portion required at the time of the heating is adjusted according to the amount Si required depending on the structure of the produced structure and according to a heating temperature at the time of the bonding.

### 2-2-2. Fe: 0.01 to 2.00%

Fe has the effect of being slightly solid-dissolved in a matrix to improve strength and having the effect of being dispersed as a crystallized product or precipitate to prevent strength from decreasing particularly at high temperature. A case in which the content of Fe is less than 0.01% not only prevents the above-described effects from being sufficiently obtained but also requires use of a high-purity base metal, thereby resulting in an increase in material cost. In contrast, a case in which the content of Fe is more than 2.00% results in, during casting, generation of a coarse intermetallic compound, which therefore causes cracking during working, thereby precluding the production of the fin material. When a bonded body is exposed to a corrosive environment (a corrosive environment in which a corrosive liquid particularly flows), corrosion resistance is deteriorated. Further, crystal grains recrystallized by the heating in the bonding are fragmented, thereby increasing a grain boundary density, and therefore, the amount of deformation during the bonding is increased, thereby increasing a variation in the dimension of the fin material before and after the bonding. Accordingly, the content of Fe is set to 0.01 to 2.00%. The content of Fe is preferably 0.20 to 1.00%.

### 2-2-3. Mn: 0.05 to 2.00%

Mn is an additional element that acts as an element which forms, together with Si and Fe, an Al-Mn-Si-based, Al-Mn-Fe-Si-based, or Al-Mn-Fe-based intermetallic compound, and is dispersed in an aluminum matrix to strengthen the fin material, or that acts as an element which is solid-dissolved in an aluminum matrix to strengthen the fin material, thereby improving strength. When the content of Mn is more than 2.00%, a coarse intermetallic compound is prone to be formed, and corrosion resistance is deteriorated. In contrast, when the content of Mn is less than 0.05%, the above-described effects become insufficient. Accordingly, the content of Mn is set to 0.05 to 2.00%. The content of Mn is preferably 0.10 to 1.50%.

### 2-2-4. Zn: 0.05 to 6.00%

Zn is an element that is effective in the improvement of corrosion resistance due to sacrificial protection action. Zn has the action of being roughly uniformly solid-dissolved in a matrix and allowing natural-potential to be lower. The sacrificial protection action of relatively suppressing the corrosion of a bonded tube can be exhibited by allowing the fin material according to the present embodiment to be baser. When the content of Zn is less than 0.05%, the effect of lower potential becomes insufficient. In contrast, when the content of Zn is more than 6.00%, a corrosion rate is increased, self-corrosion resistance is deteriorated, and sacrificial protection action is also deteriorated. Accordingly, the content of Zn is set to 0.05 to 6.00%. The content of Zn is preferably 0.10 to 5.00%.

### 2-2-5. Cu: 0.05 to 1.50%

Cu is an element that has the effect of being solid-dissolved in a matrix and improving strength. When the content of Cu is more than 1.50%, corrosion resistance is deteriorated. In contrast, when the content of Cu is less than 0.05%, the above-described effects become insufficient. Accordingly, the content of Cu is set to 0.05 to 1.50%. The content of Cu is preferably 0.10 to 1.00%.

As selective additional elements, one or more selected from 0.05 to 2.00% of Mg, 0.05 to 0.30% of In, 0.05 to 0.30% of Sn, 0.05 to 0.30% of Ti, 0.05 to 0.30% of V, 0.05 to 0.30% of Cr, 2.00% or less of Ni, and 0.30% or less of Zr may be further contained as second selective additional elements, instead of or in addition to the first selective additional element described above.

### 2-2-6. Mg: 0.05 to 2.00%

Mg exhibits the action of age hardening due to Mg₂Si after bonding and heating, and strength is improved by the age hardening. As described above, Mg is an additional element that exhibits the effect of improvement in strength. When the content of Mg is more than 2.00%, Mg reacts with a flux, whereby a compound having a high melting point is formed, and therefore, bondability is significantly deteriorated. In contrast, when the content of Mg is less than 0.05%, the above-described effects become insufficient. Accordingly, the content of Mg is set to 0.05 to 2.00%. The content of Mg is preferably 0.10 to 1.50%.

### 2-2-7. In and Sn: 0.05 to 0.30%

Sn and In show the effect of exhibiting sacrificial protection action. When the content of each of Sn and In is more than 0.30%, a corrosion rate is increased, and self-corrosion resistance is deteriorated. In contrast, when the content of each of Sn and In is less than 0.05%, the above-described effects are small. Accordingly, the content of each of Sn and In is set to 0.05 to 0.30%, and is preferably 0.10 to 0.25%.

### 2-2-8. Ti and V: 0.05 to 0.30%

Ti and V exhibit the effects of not only being solid-dissolved in a matrix to improve strength but also being distributed in a layer form to prevent corrosion from proceeding in a sheet thickness direction. When the content of each of Ti and V is more than 0.30%, a coarse crystallized product is generated, thereby inhibiting moldability and corrosion resistance. In contrast, the content of each of Ti and V is less than 0.05%, the effects are small. Accordingly, the content of each of Ti and V is set to 0.05 to 0.30%, and is preferably 0.10 to 0.25%.

### 2-2-9. Cr: 0.05 to 0.30%

Cr improves strength by solid solution strengthening and allows crystal grains after heating to be coarsened by the precipitation of an Al-Cr-based intermetallic compound. When the content of Cr is more than 0.30%, a coarse intermetallic compound is prone to be formed, and plastic workability is deteriorated. In contrast, when the content is less than 0.05%, the above-described effects are small. Accordingly, the content of Cr is set to 0.05 to 0.30% or less, and is preferably 0.10 to 0.25%.

### 2-2-10. Ni: 2.00% or less

Ni is crystallized or precipitated as an intermetallic compound and exhibits the effect of improving strength after bonding by dispersion strengthening. The content of Ni is set to 2.00% or less, and preferably 0.05 to 2.00%. When the content of Ni is more than 2.00%, a coarse intermetallic compound is prone to be formed, workability is deteriorated, and self-corrosion resistance is deteriorated.

### 2-2-11. Zr: 0.30% or less

Zr is precipitated as an Al-Zr-based intermetallic compound and exhibits the effect of improving strength after bonding by dispersion strengthening. The Al-Zr-based intermetallic compound coarsens crystal grains during heating. When the content of Zr is more than 0.30%, a coarse intermetallic compound is prone to be formed, and plastic workability is deteriorated. Accordingly, the content of Zr is set to 0.30% or less. The content of Zr is preferably 0.05 to 0.30%.

As a selective additional element, one or more selected from 0.1000% or less of Be, 0.1000% or less of Sr, 0.1000% or less of Bi, 0.1000% or less of Na, and 0.0500% or less of Ca may be further contained as a third selective additional element, instead of the first selective additional element and second selective additional element described above or in addition to either or both thereof.

### 2-2-12. Be, Sr, Bi, and Na: 0.1000% or less, And Ca: 0.0500% or less

These elements exhibit the action of allowing bondability to be further favorable by improving the characteristics of a liquid phase by setting the elements in the ranges described above. In other words, these trace elements can contribute to suppression of a decrease in sheet thickness by fine dispersion of Si particles. Bondability can be improved by improvement in the flowability of a liquid phase, and/or the like. The preferred ranges of these elements, Be, Sr, Bi, Na, and Ca, are 0.0001 to 0.1000%, 0.0001 to 0.1000%, 0.0001 to 0.1000%, 0.0001 to 0.1000%, and 0.0001 to 0.0500%, respectively. When these trace elements have contents of less than the lower limit values regulated in the preferred ranges described above, the effects such as the fine dispersion of Si particles and improvement in the flowability of a liquid phase may be insufficient. When these trace elements have contents of more than the upper limit values regulated in the preferred ranges described above, a harmful effect such as the deterioration of corrosion resistance occurs.

### 2-3. Temper

Temper may be performed on an O material or may be performed on an H1n material or an H2n material.

### 3. Production Method

### 3-1. Heating Conditions after Casting

In the fin material according to the present embodiment, the sizes of Si particles present in the vicinity of the surface layer are limited. Coarse dispersed particles in a material are known to be greatly influenced by a cooling rate in casting. It is particularly known that since the rate of diffusion of dispersed particles containing Fe or Mn is low, a cooling rate in casting greatly influences the sizes of the dispersed particles, and the higher the cooling rate in the casting is, the finer the particles are.

In contrast, Si particles are known to be finely generated during casting by a slight amount of an additional element such as Sr or Na. In the fin material according to the present embodiment, however, the distribution of Si particles in the vicinity of the surface layer is important, and the distribution of the Si particles is relatively greatly affected by retention time at high temperature in a production step after casting because the rate of the diffusion of Si in A1 is relatively high. Therefore, in any case of a DC casting method and a continuous casting method, when retention is performed at a temperature of 530°C or more in a production step after casting, the time of the retention is set to 10 hours or less. In a still more preferred heating condition, a retention time in the case of performing retention at a temperature of 520°C or more is set to 0 to 10 hours. Here, a retention time of 0 hour means that retention is stopped immediately after a predetermined retention temperature has been reached. The restrictions of such heating conditions enable all Si particles that are present in the range of the length W in the whole cross section of the fin material and satisfy D ≥ L and L + D > 0.04t to satisfy 0 ≤ ∑πD² < 0.08tW. In contrast, in the case of retention at a temperature of 530°C or more for more than 10 hours, coarsening due to Ostwald growth significantly occurs. As a result, the number of Si particles which satisfy D ≥ L and L + D > 0.04t in the Si particles in the surface layer and the equivalent circle diameter of each Si particle are increased, whereby 0 ≤ ∑πD² < 0.08tW is not satisfied.

### 3-2. In Case of DC Casting

A method for producing the aluminum alloy material used in the present embodiment may be performed according to a usual method, and it is necessary to note the heating conditions described above. An example of the production method in the case of DC casting will be described below. The rate of casting a slab in casting is controlled as described below. The casting rate influences a cooling rate and is therefore set to 20 to 100 mm/min. When the casting rate is less than 20 mm/min, it is impossible to obtain a sufficient cooling rate, and crystallized products such as Si-based particles and an Al-Fe-Mn-Si-based intermetallic compound are coarsened. In contrast, when the casting rate is more than 100 mm/min, an aluminum alloy material is not sufficiently solidified in casting, and it is impossible to obtain a normal ingot. The casting rate is preferably 30 to 80 mm/min. The casting rate can be adjusted depending on the composition of the produced alloy material in order to obtain the characteristic metal structure of the present embodiment. The cooling rate depends on the cross-sectional shape of the slab, such as a thickness or a width, and a cooling rate of 0.1 to 2°C/s can be achieved in the center of an ingot by setting the casting rate to 20 to 100 mm/min as described above. Such a cooling rate (0.1 to 2°C/s) in the center of an ingot enables the generation of coarse Si particles to be suppressed.

The thickness of the ingot (slab) in the DC casting is preferably 700 mm or less. When the thickness of the slab is more than 700 mm, it is impossible to obtain such a sufficient cooling rate as described above, and Si particles and an Al-Fe-Mn-Si-based intermetallic compound are coarsened. The thickness of the slab is more preferably 500 mm or less.

The slab cast by the DC casting method is subjected to a heating step prior to hot rolling, a hot rolling step, a cold rolling step, and an annealing step. Homogenization treatment may be performed after the casting and before the hot rolling.

The slab produced by the DC casting method is subjected to the heating step prior to the hot rolling, after the homogenization treatment or without being subjected to the homogenization treatment. It is preferable to perform the heating step according to a usual method so that a heating and retention temperature is in a range of 400 to 570°C, preferably 450 to 520°C, and a retention time is in a range of 0 to 15 hours, preferably 1 to 10 hours, and so that the retention time is not more than 10 hours when heating is performed to 530°C or more. A retention temperature of less than 400°C results in the high deformation resistance of the slab in the hot rolling and may cause cracking to occur. In contrast, a retention temperature of more than 570°C may cause melting to locally occur. When the retention time is more than 15 hours, coarsening is prone to occur due to Ostwald growth of Si particles, Ostwald growth of an Al-Fe-Mn-Si-based intermetallic compound proceeds, precipitates are coarsened, and the distribution of the precipitates becomes nondense. As a result, the frequency of the generation of the nuclei of recrystallized grains in the heating for bonding is increased, whereby a crystal particle diameter is reduced, and deformation is prone to occur in the heating for bonding. A retention time of 0 hours mean that the heating is ended immediately after the heating and retention temperature has been reached.

Subsequently to the heating step, the slab is subjected to the hot rolling step. The hot rolling step includes a hot rough rolling stage and a hot finishing rolling stage. In such a case, a total rolling reduction in the hot rough rolling stage is set to 92 to 97%, and three or more passes at a rolling reduction of 15% or more are included in passes in the hot rough rolling.

A coarse crystallized product is generated in a final solidification portion in the slab produced by the DC casting method. Since a crystallized product is sheared and divided into small portions by rolling in a step of making a sheet material, the crystallized product is observed in a particle form after the rolling. The hot rolling step includes: the hot rough rolling stage in which a sheet having a certain thickness is made from the slab; and the hot finishing rolling stage in which a sheet thickness of about several millimeters is achieved. For dividing the crystallized product, it is important to control a rolling reduction in the hot rough rolling stage in which rolling from the slab is performed. Specifically, in the hot rough rolling stage, the rolling is performed so that the thickness of the slab is from 300 to 700 mm to about 15 to 40 mm. The coarse crystallized product can be finely divided by setting a total rolling reduction in the hot rough rolling stage to 92 to 97%, preferably 94 to 96%, and allowing the hot rough rolling stage to include three or more passes at a rolling reduction of 15% or more, preferably four or more passes at a rolling reduction of 20% or more. As a result, Si particles and an Al-Fe-Mn-Si-based intermetallic compound which are crystallized products can be fragmented and can be allowed to be in an appropriate distribution state regulated in the present embodiment.

A total rolling reduction of less than 92% in the hot rough rolling stage results in the insufficient effect of the fragmentation of the crystallized product. In contrast, a total rolling reduction of more than 97% requires the small thickness of the finished sheet in the hot rough rolling, which is difficult for a facility. A method in which the thickness of an original slab is increased to increase the total rolling reduction is also acceptable but is difficult because the thickness exceeds the upper limit value of the thickness of the slab. A rolling reduction in each pass in the hot rough rolling stage also affects the distribution of the crystallized product, and the crystallized product is divided by increasing the rolling reduction in each pass. The case of less than three passes at a rolling reduction of 15% or more in passes in the hot rough rolling stage results in the insufficient effect of the fragmentation of the crystallized product. A rolling reduction of less than 15% is not targeted because the rolling reduction is insufficient, and the crystallized product is not fragmented. The upper limit of the number of passes at a rolling reduction of 15% or more is not particularly regulated but is preferably set to about ten in consideration of productivity and the like.

In the case of the H1n temper, the hot-rolled material is subjected to the cold rolling step after the hot rolling step. The conditions of the cold rolling step are not particularly limited. An annealing step in which the cold-rolled material is annealed is performed during the cold rolling step. This intermediate annealing is performed under the conditions in the ranges of 250 to 450°C and 1 to 5 hours, preferably 300 to 400°C and 2 to 4 hours. After the annealing step, the rolled material is subjected to final cold rolling to achieve a final sheet thickness. When a working rate in the final cold rolling stage, {(sheet thickness before working - sheet thickness after working)/sheet thickness (%) before working}, is too high, the driving force of recrystallization in bonding and heating is increased, and crystal grains become small, thereby increasing deformation in the heating for bonding. A working rate in the final cold rolling stage is preferably set to about 10 to 30%, more preferably about 12 to 25%. In the case of the H2n temper, after the hot rolling step, the hot-rolled material may be worked to achieve a final sheet thickness in the cold rolling step and may be subjected to final annealing, or may be subjected to final annealing in an intermediate annealing step after the final cold rolling, similarly in the case of the H1n temper.

### 3-3. In Case of Continuous Casting

The continuous casting method is not particularly limited as long as being a method for continuously casting a sheet-shaped ingot, such a twin-roller-type continuous casting rolling method or a twin-belt-type continuous casting method. The twin-roller-type continuous casting rolling method is a method in which molten aluminum is supplied between a pair of water-cooling rolls from a molten metal supply nozzle made of a refractory to continuously cast and roll a thin sheet. A Hunter method, a 3C method, or the like is known as the method. The twin-belt-type continuous casting method is a continuous casting method in which a molten metal is teemed between rotation belts that vertically face each other and are water-cooled to solidify the molten metal by cooling from a belt surface to make a slab, and the slab is continuously drawn from a side opposite to the teeming portion of the belts and wound in a coil form. A Hazelett method or the like is known as the method.

A cooling rate in casting in the twin-roller-type continuous casting rolling method is several times to several hundred times higher than that in a semi-continuous casting method. For example, the cooling rate in the case of the semi-continuous casting method is 0.5 to 20°C/s, whereas the cooling rate in the case of the twin-roller-type continuous casting rolling method is 100 to 1000°C/s. Therefore, there is a characteristic in that dispersed particles generated in casting are finely and highly densely distributed in comparison with the semi-continuous casting method.
As a result, generation of a coarse crystallized product is suppressed, and therefore, crystal grains in bonding and heating are coarsened. Since the cooling rate is high, the amount of solid-dissolved additional element can be increased. As a result, fine precipitates are formed by subsequent heat treatment and can contribute to coarsening of crystal grains in bonding and heating. In the present embodiment, the cooling rate in the case of the twin-roller-type continuous casting rolling method is preferably set to 100 to 1000°C/s, and more preferably set to 300 to 900°C/s. A cooling rate of less than 100°C/s precludes obtainment of a metal structure of interest, while a cooling rate of more than 1000°C/s precludes stable production.

The rate of a rolled sheet cast by the twin-roller-type continuous casting rolling method is preferably 0.5 to 3m/min and more preferably 1 to 2 m/min. The casting rate influences a cooling rate. When the casting rate is less than 0.5 m/min, it is impossible to obtain such a sufficient cooling rate as described above, and a compound is coarsened. When the casting rate is more than 3 m/min, the aluminum alloy material is not sufficiently solidified between the rolls during the casting, and it is impossible to obtain a normal sheet-shaped ingot.

The temperature of the molten metal cast by the twin-roller-type continuous casting rolling method is preferably in a range of 650 to 800°C. The temperature of the molten metal is the temperature of a head box just in front of the molten metal supply nozzle. A molten metal temperature of less than 650°C allows the dispersed particles of a coarse crystallized product to be generated in the molten metal supply nozzle and allows the dispersed particles to be mixed into the ingot, thereby causing the sheet to be cut in the cold rolling. A molten metal temperature of more than 800°C prevents the aluminum alloy material from being sufficiently solidified between the rolls in the casting, whereby it is impossible to obtain a normal sheet-shaped ingot. The temperature of the molten metal is more preferably 680 to 750°C.

The sheet thickness of the sheet-shaped ingot cast by the twin-roller-type continuous casting rolling method is preferably 2 to 10 mm. In the range of the thickness, a homogeneous structure in which the solidification rate of the center of the sheet thickness is high is easily obtained. A sheet thickness of less than 2 mm results in the small amount of aluminum passed through a casting machine per unit time, thereby precluding stable supply of a molten metal in a sheet width direction. In contrast, a sheet thickness of more than 10 mm precludes winding by the rolls. The sheet thickness of the sheet-shaped ingot is more preferably 4 to 8 mm.

In the step of cold-rolling the sheet-shaped ingot, cast by the twin-roller-type continuous casting rolling method, to achieve a final sheet thickness, annealing is performed at 250 to 550°C for 1 to 10 hours, preferably at 300 to 500°C for 2 to 8 hours, where a time for which retention at 530°C or more is performed is in a range of 10 hours or less. The annealing may be performed in any step, except the final cold rolling, in the production step after the casting. It is necessary to perform the annealing one or more times. The upper limit of the number of times of the annealing is preferably three, more preferably two. The annealing is performed for softening the material to facilitate the obtainment of desired material strength in the final rolling. The size and density of the crystallized product and the precipitate in the material, and the amount of the solid solution of an added element can be optimally adjusted by the annealing.

When the temperature of the annealing is less than 250°C, tensile strength (TS) before brazing heating becomes high because the material is insufficiently softened. High TS before brazing heating results in poor moldability and therefore in the deterioration of a core dimension, thereby resulting in the deterioration of durability. In contrast, when the annealing is performed at a temperature of more than 550°C, the amount of heat input into the material during the production step is too large, and therefore, the crystallized product and the precipitate are coarsely and sparse distributed. The coarsely and sparse distributed crystallized product and precipitate hardly include a solid-dissolved element and allow the amount of solid solution in the material to be inhibited from decreasing. An annealing time of less than 1 hour allows the above-described effects to be insufficient, and an annealing time of more than 10 hours allows the above-described effects to be saturated and therefore results in economical disadvantage.

### 4. Bonding Conditions

### 4-1. Heating Conditions

A bonding method using the fin material according to the present embodiment will now be described. The fin material according to the present embodiment has the ability of being bonded by heating with a single layer and exhibits the function of generating a liquid phase in the material by heating and of bonding by the liquid phase. A higher temperature at the time of heating results in formation of a larger amount of liquid phase and facilitates security of bondability. However, the formation of a larger amount of liquid phase facilitates a decrease in the sheet thickness of the fin material and the deformation of the fin material. Therefore, it is important to manage the conditions of the heating for bonding. Specifically, the heating is performed for a time required for the bonding at a temperature which is not less than a solidus line in which a liquid phase is generated in the fin material according to the present embodiment, which is not more than a liquidus line, and which is less than a temperature at which the generation of the liquid phase in the fin material results in a decrease in strength, thereby making it impossible to maintain a shape.

For a further specific heating condition, it is necessary to perform the bonding at a temperature at which the ratio of the mass of a liquid phase generated in the fin material to the total mass of the fin material (hereinafter referred to as "liquid phase ratio") is more than 0% and 35% or less. A liquid phase ratio of more than 0% is required because it is impossible to perform the bonding unless the liquid phase is generated. However, since a less liquid phase may preclude the bonding, a liquid phase ratio of 5% or more is preferred. In contrast, a liquid phase ratio of more than 35% results in the excessively large amount of generated liquid phase, thereby causing the fin material to be greatly deformed at the time of the heating for bonding and making it impossible to maintain a shape. A liquid phase ratio of 5 to 30% is preferred, and a liquid phase ratio of 10 to 20% is more preferred.

For sufficiently filling the liquid phase of the fin material between the fin material and another member bonded to the fin material, consideration of the time of filling the liquid phase is preferred, and a time for which the liquid phase ratio is 5% or more is 30 to 3600 seconds. More preferably, the time for which the liquid phase ratio is 5% or more is 60 to 1800 seconds, resulting in further sufficient filling and reliable bonding. When the time for which the liquid phase ratio is 5% or more is less than 30 seconds, the liquid phase may be prevented from being sufficiently filled into a bond portion. In contrast, when the time is more than 3600 seconds, the deformation of the fin material may proceed. In the bonding method in the present embodiment, the liquid phase moves only in the extreme vicinity of the bond portion, and a time required for the filling does not depend on the size of the bond portion.

For specific examples of preferred heating conditions, a bonding temperature may be set at 580 to 640°C, and a retention time at the bonding temperature in this range may be set to 0 to 10 minutes, in the case of the above-described fin material according to the present embodiment. Here, 0 minutes mean that cooling is started immediately after the temperature of a member has reached a predetermined bonding temperature. The above-described retention time is more preferably 30 seconds to 5 minutes. The bonding temperature is more preferably set to 590 to 620°C. For example, it is desirable to set a bonding and heating temperature to a lower temperature of 580 to 590°C when the content of Si is about 4 to 5%. The heating conditions may be adjusted depending on composition in order to allow the metal structure of the bond portion to be in a preferred state described later.

Measurement of an actual liquid phase ratio during heating is very difficult. Thus, a liquid phase ratio regulated in the present embodiment can be typically determined by a lever rule on the basis of alloy composition and maximum attainment temperature using an equilibrium diagram. In an alloy system of which the phase diagram has already been revealed, a liquid phase ratio can be determined by using a lever rule with the use of the phase diagram. In contrast, in an alloy system of which the equilibrium diagram is not made to be public, a liquid phase ratio can be determined using equilibrium calculation phase diagram software. A technique in which a liquid phase ratio is determined by a lever rule with the use of alloy composition and temperature is incorporated into the equilibrium calculation phase diagram software. Examples of the equilibrium calculation phase diagram software include Thermo-Calc, manufactured by Thermo-Calc Software AB. In the alloy system of which the equilibrium diagram has been revealed, the equilibrium calculation phase diagram software may also be used for simplification because the same result as the result of the determination of a liquid phase ratio by using a lever rule on the basis of the equilibrium diagram is given even if the liquid phase ratio is calculated using the equilibrium calculation phase diagram software.

### 4-2. Others

A heating atmosphere in heat treatment is preferably a non-oxidizing atmosphere replaced with nitrogen, argon, or the like; or the like. Further favorable bondability can be obtained by using a non-corrosive flux. Further, heating and bonding can be performed in a vacuum and under reduced pressure.

Examples of a method for applying the non-corrosive flux include a method in which a member to be bonded is assembled, followed by sprinkling a flux powder on the member, and a method in which a flux powder is suspended in water, and the flux powder with water is spray-coated. In the case of coating the material in advance, the adhesiveness of the coating can be enhanced by applying a flux powder mixed with a binder such as acryl resin. Examples of non-corrosive fluxes used for obtaining the usual functions of the fluxes include: fluoride-based fluxes such as KAlF₄, K₂AlF₅, K₂AlF₅·H₂O, K₃AlF₆, AlF₃, KZnF₃, and K₂SiF₆; and cesium-based fluxes such as Cs₃AlF₆, CsAlF₄·2H₂O, and Cs₂AlF₅·H₂O.

### 5. Metal Structure after Bonding

In the fin material according to the present embodiment, a crystal particle diameter after bonding and heating is preferably set to 50 µm or more, and more preferably set to 200 µm or more, in order to suppress deformation (warpage or buckling) in the heating for bonding. When the crystal particle diameter is less than 50 µm, grain boundary sliding may occur, thereby resulting in significant deformation, in bonding and heating. When the crystal particle diameter is 50 µm or more, deformation in the heating for bonding is suppressed, and therefore, a clearance between the fin material and another member such as a tube is appropriately maintained, whereby bondability can be improved. The upper limit value of the crystal particle diameter is not particularly limited but depends on alloy composition and a production method, and is about 2000 µm in the present embodiment.

### 6. Application to Clad Material

The fin material according to the present embodiment has a feature in that a decrease in sheet thickness is suppressed by controlling a metal structure in the vicinity of a surface layer. Such an effect can also be obtained similarly in the case of cladding the fin material according to the present embodiment on another material. In such a case, a decrease in sheet thickness is up to 8% or less of the thickness of the clad fin material portion according to the present embodiment, thereby therefore achieving the less rate of the decrease in sheet thickness with respect to the sheet thickness of the whole clad material. Thus, a cladding ratio is not particularly limited, and may be in a range enabling production. Specifically, the cladding ratio is about 2% to 98%, preferably about 5 to 95%, depending on the sheet thickness of the clad material.

Examples of such clad materials include an aluminum alloy brazing sheet in which the fin material according to the present embodiment is clad as a skin material on one surface or both surfaces of a core material made of an aluminum alloy. For example, 1000-series pure aluminum, or an aluminum alloy such as a 3000- series or 6000-series aluminum alloy is used as the core material.

### 7. Application to Heat Exchanger

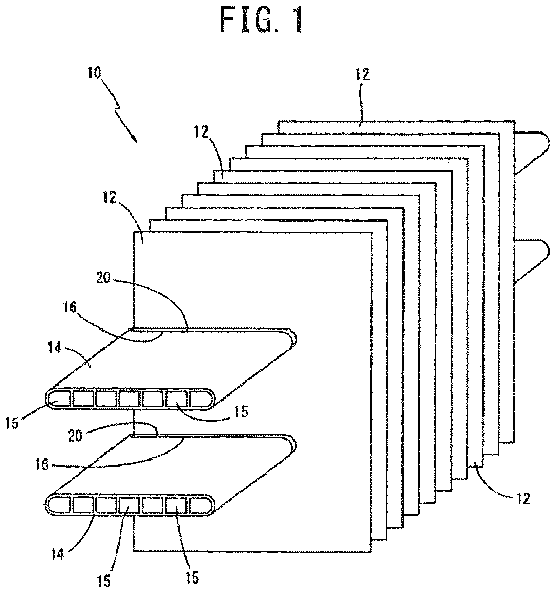

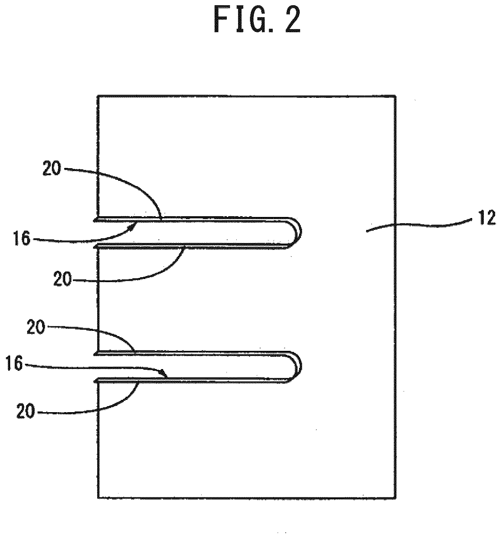

Since a decrease in sheet thickness is suppressed in the fin material according to the present embodiment, the application of the fin material to a heat exchanger results in improvement in bondability. For example, plural notch grooves 16 opened to penetrate the same positions of a plate-shaped fin material are disposed at a predetermined spacing along each end edge of many sheet-shaped fins 12 which overlap one another at a predetermined spacing, as illustrated in FIGS. 1 and 2. Collars 20 are formed about the notch grooves 16 so as to come in contact with surfaces of flat tubes 14 including flow passages 15 through which a heat-transfer fluid is allowed to flow. The flat tubes 14 are assembled in the state of extending in the direction of overlapping such sheet-shaped fins 12 by fitting each of the flat tubes 14 into each of the notch grooves 16 at the same positions, bonded, and heated, whereby a heat exchanger 10 is produced. The heat exchanger may be produced by heating and bonding the fin material according to the present embodiment, worked in a wave (corrugated) shape, between the flat tubes which are arranged at a predetermined pacing so that flat portions face each other, and through which the heat-transfer fluid flows.

### Examples

Preferred embodiments of the present disclosure will be specifically described below based on Examples and Comparative Examples. However, the present disclosure is not limited thereto.

First, test materials having a thickness of 400 mm, a width of 1000 mm, and a length of 3000 mm were cast by a DC casting method using aluminum alloys having alloy compositions A1 to A23 set forth in Table 1. A casting rate was set to 50 mm/min at a cooling rate set to 1°C /s. In the alloy compositions in Table 1, "-" indicates a value that is not more than a detection limit, and "balance" includes inevitable impurities. Then, the ingot cast by the DC casting method was faced to have a thickness of 380 mm, then heated to a temperature of 480°C in a heating and retention step prior to hot rolling, retained at the temperature for 5 hours, and then subjected to a hot rolling step. In the hot rolling step, the ingot was rolled to have a thickness of 3 mm. A total rolling reduction in hot rough rolling in the hot rolling step was 92.5%, and three or more passes at a rolling reduction of 15% or more in each pass in the hot rough rolling were performed. In a subsequent cold rolling step, the rolled sheet was rolled to have thickness of 0.09 mm. Further, the rolled material was subjected to an intermediate annealing step at 380°C for 2 hours and finally rolled to have a final sheet thickness of 0.07 mm in a final cold rolling stage, thereby obtaining a sample material. A working rate in the final cold rolling stage was 22.2%.

### [Table 1]

**Table 1**

| Alloy Designation | Alloy Composition (mass%) | | | | | |
|---|---|---|---|---|---|---|
| | Si | Fe | Cu | Mn | Zn | Al and inevitable impurities |
| A1 | 1.70 | - | - | - | - | Balance |
| A2 | 3.70 | - | - | - | - | Balance |
| A3 | 4.80 | - | - | - | - | Balance |
| A4 | 1.00 | - | - | - | - | Balance |
| A5 | 5.50 | - | - | - | - | Balance |
| A6 | 2.50 | 0.05 | 0.08 | 1.00 | - | Balance |
| A7 | 2.50 | 0.60 | 0.08 | 1.00 | - | Balance |
| A8 | 2.50 | 1.50 | 0.08 | 1.00 | - | Balance |
| A9 | 2.50 | 0.25 | 0.08 | 1.00 | - | Balance |
| A10 | 2.50 | 0.25 | 0.50 | 1.00 | - | Balance |
| A11 | 2.50 | 0.25 | 1.40 | 1.00 | - | Balance |
| A12 | 2.50 | 0.25 | 0.08 | 0.08 | - | Balance |
| A13 | 2.50 | 0.25 | 0.08 | 0.50 | - | Balance |
| A14 | 2.50 | 0.25 | 0.08 | 1.80 | - | Balance |
| A15 | 2.50 | 0.25 | 0.08 | 1.00 | 0.08 | Balance |
| A16 | 2.50 | 0.25 | 0.08 | 1.00 | 0.50 | Balance |
| A17 | 2.50 | 0.25 | 0.08 | 1.00 | 1.00 | Balance |
| A18 | 2.50 | 0.25 | 0.08 | 1.00 | 3.00 | Balance |
| A19 | 2.50 | 0.25 | 0.08 | 1.00 | 4.80 | Balance |
| A20 | 2.50 | 0.25 | 0.08 | 1.00 | 6.50 | Balance |
| A21 | 2.50 | 2.50 | 0.08 | 1.00 | 1.50 | Balance |
| A22 | 2.50 | 0.25 | 2.00 | 1.00 | 1.50 | Balance |
| A23 | 2.50 | 0.25 | 0.08 | 2.50 | 1.50 | Balance |
| B1 | 0.05 | 0.15 | 0.40 | 0.15 | - | Balance |
| C1 | 10.00 | 0.25 | - | - | - | Balance |
| C2 | 0.05 | 0.50 | 0.08 | 1.10 | - | Balance |
| C3 | 2.50 | 0.25 | - | - | - | Balance |

A sample material with the alloy composition A2, heated to a temperature of 520°C after DC casting and retained at the temperature for 10 hours in a different manner from the manner described above, was produced (DC2 of Example 19 in Table 2 described later). In addition, a sample material with the alloy composition A3, heated to a temperature of 540°C after DC casting and retained at the temperature for 15 hours in a different manner from the manner described above, was produced (DC3 of Comparative Example 1 in Table 2 described later). Then, the test material was subjected to the hot rolling step. In the hot rolling step, the test material was rolled to have a thickness of 3 mm. A total rolling reduction in hot rough rolling in the hot rolling step was 92.5%, and three or more passes at a rolling reduction of 15% or more in each pass in the hot rough rolling were performed. In a subsequent cold rolling step, the rolled sheet was rolled to have thickness of 0.09 mm. Further, the rolled material was subjected to an intermediate annealing step at 380°C for 2 hours and finally rolled to have a final sheet thickness of 0.07 mm in a final cold rolling stage, thereby obtaining a sample material. A working rate in the final cold rolling stage was 22.2%.

In addition, an ingot with the component of A17 was also cast by a twin-roller-type continuous casting rolling method in a different manner from the manner described above. The temperature of a molten metal cast by the twin-roller-type continuous casting rolling method was 650 to 800°C, and the thickness of a cast metal sheet was 6 mm. A casting rate was set to 700 mm/min at a cooling rate set to 200°C/s. Then, the obtained sheet-shaped ingot was cold-rolled to 0.7 mm, subjected to intermediate annealing at 480°C for 5 hours, then cold-rolled to 0.09 mm, subjected to the second annealing at 380°C for 2 hours, and then cold-rolled to 0.070 mm, thereby obtaining a sample material.

Further, C1, C2, and C3 in Table 1 are cast by a DC casting method in a manner similar to the manner for A1 to A23 and subjected to a heating and retention step prior to hot rolling. Then, C1 and C3 were put on both surfaces of C2, respectively, at a cladding ratio of 10% and hot-clad-rolled to produce clad materials CL1 (C1/C2/C1) and CL2 (C3/C2/C3). In a hot clad rolling step, the rolling was performed to achieve a thickness of 3 mm. A total rolling reduction in hot rough rolling in the hot clad rolling step was 93.8%, and three or more passes at a rolling reduction of 15% or more in each pass in the hot rough rolling were performed. In a subsequent cold rolling step, the rolled sheet was rolled to have thickness of 0.09 mm. Further, the rolled material was subjected to an intermediate annealing step at 380°C for 2 hours and finally rolled to have a final sheet thickness of 0.07 mm in a final cold rolling stage, thereby obtaining a sample material. A working rate in the final cold rolling stage was 22.2%.

The sample materials produced as described above were evaluated as described below.

### <Productability>

First, productability in a production process was evaluated. In a method for evaluating the productability, a case in which no problem occurred and a favorable sheet material or slab was obtained in the production process when the sheet material or slab was produced was evaluated as "good", while a case in which cracking occurred in casting or a case in which the generation of a big crystallized product in the casting caused rolling to be precluded and productability was problematic was evaluated as "fair". The results are set forth in Table 2.

### [Table 2]

**Table 2**

| Examples/Comparative Examples | Evaluation | | | | | | | |
|---|---|---|---|---|---|---|---|---|
| | Alloy Designation | Production Method | Productability | Metal Structure | Decrease in Sheet Thickness (%) | Tensile Test (MPa) | Bondability (%) | Corrosion Resistance |
| Example 1 | A1 | DC | Good | 0.006 | 3 | 95 | 100 | Fair |
| Example 2 | A2 | DC | Good | 0.012 | 5 | 110 | 76 | Fair |
| Example 3 | A3 | DC | Good | 0.016 | 7 | 121 | 60 | Fair |
| Example 4 | A6 | DC | Good | 0.007 | 3 | 141 | 100 | Fair |
| Example 5 | A7 | DC | Good | 0.007 | 3 | 139 | 100 | Fair |
| Example 6 | A8 | DC | Good | 0.007 | 3 | 145 | 100 | Fair |
| Example 7 | A9 | DC | Good | 0.007 | 3 | 139 | 100 | Fair |
| Example 8 | A10 | DC | Good | 0.007 | 3 | 159 | 100 | Fair |
| Example 9 | A11 | DC | Good | 0.007 | 3 | 206 | 100 | Fair |
| Example 10 | A12 | DC | Good | 0.008 | 4 | 113 | 100 | Fair |
| Example 11 | A13 | DC | Good | 0.008 | 4 | 123 | 100 | Fair |
| Example 12 | A14 | DC | Good | 0.006 | 3 | 167 | 100 | Fair |
| Example 13 | A15 | DC | Good | 0.007 | 3 | 143 | 100 | Fair |
| Example 14 | A16 | DC | Good | 0.007 | 3 | 141 | 100 | Good |
| Example 15 | A17 | DC | Good | 0.007 | 3 | 139 | 100 | Good |
| Example 16 | A18 | DC | Good | 0.007 | 3 | 141 | 100 | Excellent |
| Example 17 | A19 | DC | Good | 0.007 | 3 | 142 | 100 | Excellent |
| Example 18 | A17 | CC | Good | 0.006 | 3 | 154 | 100 | Good |
| Example 19 | A2 | DC2 | Good | 0.014 | 6 | 108 | 75 | Good |
| Example 20 | CL2 | DC | Good | 0.008 | 4 | 107 | 100 | Fair |
| Comparative Example 1 | A3 | DC3 | Good | 0.018 | 8 | 95 | 53 | Fair |
| Comparative Example 2 | A4 | DC | Good | 0.003 | 2 | 92 | 0 | Fair |
| Comparative Example 3 | A5 | DC | Good | 0.018 | 9 | 125 | 51 | Fair |
| Comparative Example 4 | CL1 | DC | Good | 0.033 | 15 | 164 | 40 | Fair |
| Comparative Example 5 | A20 | DC | Good | 0.007 | 3 | 141 | 100 | Poor |
| Comparative Example 6 | A21 | DC | Fair | 0.007 | - | - | - | - |
| Comparative Example 7 | A22 | DC | Fair | 0.007 | - | - | - | - |
| Comparative Example 8 | A23 | DC | Fair | 0.005 | - | - | - | - |

### <Metal Structure>

Then, the metal structures prior to the bonding and heating of the sample materials were evaluated. A cross section along the thickness direction of each sample material was polished, and a photograph of an SEM observation image was taken. An equivalent circle diameter D and a distance L from a surface layer were measured by the image analysis of the SEM observation image in the area region of the whole portion (t × W (W: 3 mm)) of the cross section, only Si particles satisfying D ≥ L and D + L > 0.04t were chosen, and the total (∑πD²) of πD² of the Si particles was calculated. In the present Examples, the regulation of the present disclosure is satisfied if ∑πD² is less than 0.08tW = 0.08 × 0.07 (mm) × 3 (mm) = 0.017 (mm²). The results of calculated ∑πD² (mm²) for the metal structures are set forth in Table 2.

### <Decrease in Sheet Thickness>

The rate of decrease in the sheet thickness of the sample material in the case of heating at a temperature equivalent to a bonding and heating temperature was evaluated. In such a case, fin sheet thicknesses before and after the heating were measured with a micrometer. In such a case, the rate of decrease in sheet thickness was calculated with the arithmetic mean value of measured sheet thicknesses at the same three or more positions before and after the heating in order to measure a difference before and after the heating. For the heating operation, each sample material was cut to have a length of 100 mm and a width of 20 mm, a hole was made in one end in a longitudinal direction, a stainless steel wire was passed through the hole, and the sample material was heated to 600°C and retained for 3 minutes in a state in which a stand was hung with the wire. In the present Examples and Comparative Examples, a decrease in sheet thickness of less than 8% was regarded as acceptable. The results are set forth in Table 2. A decrease (%) in sheet thickness set forth in Table 2 is defined as a value obtained by discarding digits to the right of the decimal point of an actually determined numerical value.

### <Tensile Test>

A tensile test on each sample material before bonding and heating was conducted. The tensile test on each sample material was conducted at ordinary temperature according to JIS Z2241 under conditions of a tension speed of 10 mm/min and a gauge length of 50 mm. The results are set forth in Table 2.

### <Bondability>

Then, bondability was evaluated. As illustrated in FIG. 1, each test material was cut to have a width of 20 mm and a length of 100 mm, and a fin material including notches having a width of 2 mm and a length of 15 mm at a pitch of 10 mm was made by pressing. As illustrated in the cross-sectional view of FIG. 1, collars were perpendicularly cut and raised to have a height of 0.5 mm in the notches of the fin material. Such twenty fin materials were aligned in parallel at a pitch of 2 mm so that the positions of the notches were uniform. Multi-port tubes having the composition of B1 set forth in Table 1 were inserted into the notches. Such a multi-port tube was set to have a thickness of 1.98 mm, a width of 20 mm, and a length of 60 mm. The twenty fins and the ten multi-port tubes were incorporated in combination into a stainless steel jig to produce a test piece (mini core).

The mini core produced as described above was dipped in a 10% suspension of a non-corrosive fluoride-based flux, dried, then heated to 600°C in a nitrogen atmosphere, and retained for 3 minutes, thereby heating and bonding the fin materials and the multi-port tubes.

After the heating and bonding of the fin materials and the multi-port tubes, the fins were removed from the multi-port tubes, and the states of the twenty bond portions between the multi-port tubes and the fins of the mini-core were examined. The rate (bonding rate) of points where the bond portions had been completely bonded was measured. In the present Examples and Comparative Examples, a bonding rate of 60% or more was regarded as acceptable. The results are sets forth in Table 2.

### <Corrosion Resistance>

Further, the corrosion resistance of the mini core produced as described above was evaluated. A CASS test was conducted for 500 h to confirm the corrosion states of the multi-port tubes. The depth of the corrosion of a maximum corrosion portion was measured by a focal method with a microscope, a depth of 50 µm or less was regarded as excellent, a depth of more than 50 µm and 150 µm or less was regarded as good, a depth of more than 150 µm and 300 µm or less was regarded as fair, and a depth of more than 300 µm was regarded as poor. The results are set forth in Table 2.

As set forth in Table 2, productability, a decrease in sheet thickness, a tensile test, bondability, and corrosion resistance were favorable in the compositions and metal structures of the aluminum alloy materials in Examples 1 to 20 including the conditions regulated in the present disclosure.
In contrast, in Comparative Example 1, the metal structure of the fin material did not satisfy the regulations, and therefore, a decrease in sheet thickness of more than 8% and bad bondability were exhibited.
In Comparative Example 2, the Si component in the fin material was less than 1.50%, and therefore, an insufficient liquid phase ratio and bad bondability were exhibited.
In Comparative Example 3, the Si component in the fin material was more than 5.00%, therefore, the metal structure did not satisfy the regulations, and a decrease in sheet thickness of more than 8% and bad bondability were exhibited.
In Comparative Example 4, the content of Si in the fin material (C1) used in the skin material of the clad material was high, therefore, the metal structure did not satisfy the regulations, and a decrease in sheet thickness of more than 8% and bad bondability were exhibited.
In Comparative Example 5, the Zn component in the fin material was more than 6.00%, and therefore, deteriorated self-corrosion resistance and bad corrosion resistance were exhibited.
In Comparative Examples 6 to 8, the content of each of the Fe, Cu, and Mn components in the fin materials was large, therefore, coarse crystallized products were formed in the casting, and productability was problematic.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

This application claims the benefit of Japanese Patent Application No. 2016-79933, filed on April 12, 2016, and Japanese Patent Application No. 2017-60744, filed on March 27, 2017, of which the entirety of the disclosures is incorporated by reference herein.

### Industrial Applicability

According to the present disclosure, an aluminum alloy fin material which has high bondability and high rigidity, of which the thickness can be reduced, and of which the reduction in the weight is achieved, a brazing sheet in which the aluminum alloy fin material is used, and a heat exchanger in which the fin material or the brazing sheet is used in a fin are provided as described above.

### Reference Signs List

- 10: Heat exchanger

- 12: Sheet-shaped fin
- 14: Flat tube
- 15: Flow passage
- 16: Notch groove
- 20: Collar

## Claims

1. An aluminum alloy fin material comprising:
an aluminum alloy containing 1.50 to 5.00 mass% Si with a balance of A1 and inevitable impurities,
wherein assuming that in a cross section along a thickness direction of the fin material, an equivalent circle diameter of a Si particle is represented by D, a distance from a surface layer to a center of the Si particle is represented by L, a thickness of the fin material is represented by t, and a length parallel to the surface layer is represented by W, all Si particles that are present in a range of the length W and satisfy D ≥ L and L + D > 0.04t also satisfy 0 ≤ ∑πD² < 0.08tW.

2. The aluminum alloy fin material according to claim 1, wherein the aluminum alloy further contains one or more selected from 0.01 to 2.00 mass% Fe, 0.05 to 2.00 mass% Mn, 0.05 to 6.00 mass% Zn, and 0.05 to 1.50 mass% Cu.

3. An aluminum alloy brazing sheet comprising, as a skin material, the fin material according to claim 1 or 2, wherein the fin material is clad on a core material comprising an aluminum alloy.

4. A heat exchanger comprising the aluminum alloy fin material according to claim 1 or 2, wherein the aluminum alloy fin material is used in a fin.

5. A heat exchanger comprising the aluminum alloy brazing sheet according to claim 3, wherein the aluminum alloy brazing sheet is used in a fin.
